# EUROPÄISCHE PATENTSCHRIFT

(11) **EP 2 374 942 B1**
(45) Veröffentlichungstag und Bekanntmachung des Hinweises auf die Patenterteilung: **07.01.2015**
(21) Anmeldenummer: 10003635.9
(22) Anmeldetag: 01.04.2010
(51) Int. Cl.: E02D 5/04, F24J 3/08

(54) **Vorrichtung und Verfahren zur Wärmegewinnung aus der Umgebung**
Device and method for generating heat from the environment
Dispositif et procédé de production de chaleur à partir de l'environnement

(43) Veröffentlichungstag der Anmeldung: 12.10.2011
(73) Patentinhaber: SPS Energy GmbH, 56593 Horhausen (DE)
(72) Erfinder: Puttke, Bernhard, 82444 Schlehdorf (DE)
(74) Vertreter: Von Kreisler Selting Werner - Partnerschaft von Patentanwälten und Rechtsanwälten mbB

(56) Entgegenhaltungen:
- EP-A1- 0 019 071
- GB-A- 768 590
- US-A- 2 673 453

## Beschreibung

Die Erfindung betrifft eine Vorrichtung zur Wärmegewinnung aus der Umgebung nach dem Oberbegriff des Anspruchs 1 sowie ein Verfahren gemäß Anspruch 8.

Der Einsatz von Spundwänden im Wasser- und Tiefbau ist bekannt. Spundwände dienen zur Sicherung von Baugruben oder Geländevorsprüngen und können zugleich eine Dichtungsfunktion übernehmen, so dass auch eine Abdichtung gegen Wasser oder kontaminiertes Erdreich möglich ist. Im Wasserbau können die Spundwände beispielsweise als Kaimauern, Dockbauwerke für Wasserstraßen und für Ufersicherungen verwendet werden.

Eine Spundwand besteht aus einzelnen Spundwandelementen, die in den Boden gerammt oder gerüttelt werden. Die Spundwandelemente bestehen zumeist aus Stahl. Die einzelnen Spundwandelemente, aus denen eine Spundwand besteht, sind miteinander durch ineinandergreifende Schlösser verbunden, so dass eine zusammenhängende Spundwand gebildet werden kann. Beim Rammen wird jedes Spundwandelement durch das Schloss des zuletzt gerammten Spurwandelementes seitlich geführt und mit ihm kraftschlüssig und wasserdicht verbunden. Es existieren verschiedene Spundwandelemente unterschiedlicher Hersteller. Gängige Spundwandelemente sind beispielsweise in den Längen von ca. 6 m bis 30 m lieferbar.

Spundwände werden auch dauerhaft als Bauelement im Wasserbau für Kaimauern, Schleusenwände, Kanäle, Molen oder Hafenbecken, sowie zum Hochwasserschutz eingesetzt.

Aus der DE 2819737 sind Spundwände aus Spundwandelementen unterschiedlicher Profilierungen bekannt. Weiter zeigt EP 0019071 A eine Vorrichtung entsprechend dem Oberbegriff des Anspruch 1.

Spundwände werden bevorzugt eingesetzt, da sie kostengünstig produziert und eingebaut werden können und zudem noch wartungsfrei und langlebig sind.

Es ist ferner bekannt, mit Hilfe von Wärmepumpen in der Umgebung vorhandene Energie zu sammeln und als Heizwärme oder Wärme für die Warmwasserbereitung zu nutzen.

Außerdem sind Wärmerohre als Wärmeübertrager bekannt, die unter Nutzung von Verdampfungswärme eines Stoffes eine hohe Wärmestromdichte erlauben. Zur Bewegung des Wärme-Transportmediums (Arbeitsfluid) benötigen Wärmerohre keine zusätzliche Hilfsenergie wie zum Beispiel eine Umwälzpumpe, so dass sich dadurch Wartungsaufwand und Betriebskosten minimieren.

Wärmerohre sind als Heatpipes oder auch als zwei- Phasen-Thermosiphone bekannt.

Wärmerohre enthalten grundsätzlich einen hermetisch gekapselten Hohlraum, meistens in Form eines Rohres. Der Hohlraum ist mit einem Wärmetransportmedium gefüllt, das das Volumen in dem Hohlraum zu einem kleineren Teil in flüssigem, zum größeren Teil im dampfförmigen Zustand ausfüllt.

Der Einsatzbereich eines Wärmerohrs beschränkt sich auf den Bereich zwischen der Schmelztemperatur und der Temperatur des kritischen Punkts des verwendeten Arbeitsfluids. Ein bevorzugtes Wärmetransportmedium ist in dem Temperaturbereich - 10° Celsius und +40° Celsius anwendbar.

Der Erfindung liegt die Aufgabe zugrunde, eine Vorrichtung und ein Verfahren zur Gewinnung regenerativer Wärme aus der Umwelt zu schaffen, bei denen mit ohnehin erforderlichen Bauelementen eine effiziente Energiegewinnung aus der Umgebung möglich ist.

Zur Lösung dieser Aufgabe dienen die Merkmale des Anspruchs 1, sowie 8 und 11.

Die Erfindung schafft in vorteilhafter Weise eine Vorrichtung und ein Verfahren zur Gewinnung regenerativer Wärmeenergie aus der Umwelt mit Hilfe einer Spundwand mit integrierten Wärmerohren, die beispielsweise in oder unmittelbar an Gewässern wie Flüsse, Seen oder Meere eingesetzt werden können. Ein an dem wärmeren Ende der Wärmerohre angeordneter Wärmetauscher ermöglicht die aus dem Wasser oder dem Erdreich entzogene Wärmeenergie über einen Wärmetauscher an eine Wärmepumpe weiterzuleiten.

Ein wesentlicher Vorteil einer solchen Wärmegewinnungsanlage besteht darin, dass ohnehin benötigte Bauelemente dazu genutzt werden können, mit ihrer großen Kontaktfläche der Umgebung Wärmeenergie zu entziehen. Da die Spundwände durch die Integration von Wärmerohren sogar noch höhere Festigkeiten erzielen, ist die mechanische Stabilisierung von beispielsweise Ufern, Untergründen und Gewässerschutzbauten und Dämmen, nicht nur im vollem Umfang gewährleistet, sondern erfüllt sogar erhöhte Auslegungsanforderungen.

Durch die Wärmegewinnung aus Wasser können die Gewässertemperaturen reduziert werden und damit beispielsweise Temperaturanstiege in Gewässern beispielsweise durch Abwassereinleitungen kompensiert werden.

Auch bei Hochwasserschutzanlagen lässt sich der zusätzliche Vorteil erzielen, dass mit den Bauelementen eine Energiegewinnung möglich ist.

Bei einem bevorzugten Ausführungsbeispiel ist vorgesehen, dass das Spundwandelement doppelwandig ist, und dass in dem darin gebildeten Hohlraum ein Wärmerohr integriert ist.

Das Wärmerohr kann auch aus einem im Querschnitt runden oder quaderförmigen Rohr gebildet sein, das an der Spundwand befestigt oder mit dieser verschweißt ist.

Vorzugsweise besteht das Wärmerohr aus einer CO₂-Heatpipe. Heatpipes weisen ein ausgezeichnetes Wärmetransportvermögen auf. Bevorzugt wird CO₂ als Wärmetransportmedium (Arbeitsfluid) wegen der biologischen Unbedenklichkeit eingesetzt.

Die thermodynamische Auslegung dieser Heatpipes erfolgt derart, dass die beiden thermodynamischen Vorgänge, nämlich der Verdampfungs- und Kondensationsprozess in dem geschlossenen System ohne Umwälzpumpe und ohne Fremdenergie ablaufen können. Die Heatpipes erfüllen reine Kondensatorzwecke und sind hierfür ausgelegt und optimiert. Falls sie als vorgefertigte Einheiten mit der Spundwand verbunden oder an dieser befestigt werden, tragen sie nicht selbst zur einer erhöhten mechanischen Stabilität der Spundwände bei.

Vorzugsweise sind die Wärmerohre in dem sich im Wasser befindlichen Bereich der Spundwand auf der dem Wasser abgewandten Seite angeordnet. Dadurch ist eine geschützte Anordnung der Wärmerohre möglich, die dennoch den Wärmetransport über die Spundwandelemente bis zum Wärmetauscher ermöglicht.

Die Spundwand befindet sich vorzugsweise zu 2/3 im Baugrund und zu 1/3 im Wasser.

Für die Wärmegewinnung steht dennoch die gesamte Spundwandfläche, die sich im Kontakt mit dem Wasser oder dem Erdreich befindet, zur Verfügung.

Im Folgenden werden unter Bezugnahme auf die Zeichnungen Ausführungsbeispiele der Erfindung näher erläutert:

Es zeigen
- Figur 1: eine Spundwand im Bereich des Wasserbaus,
- Figuren 2 bis 8: unterschiedliche Profilierungen einer Spundwand mit eingebauten Wärmerohren im Querschnitt.

Um die in einem Gewässer 10 gespeicherte Wärme zu nutzen, ohne wassergefährdende Medien zu verwenden, gleichzeitig aber die hohen Effizienz der Wärmepumpentechnologie zu nutzen, werden in eine Spundwand 2 integrierte Wärmerohre 8 oberflächennah in offene Gewässer 10 und/oder in deren Nähe unter hydrologischem Regime eingesetzt.

Durch eine neue Art von in Spundwänden 2 integrierten Wärmerohren 8, welche als CO₂-Heat Pipe oder mit einem technisch gleichwertigen Wärmetransportmedium befülltes Wärmerohr 8 in offene Gewässer 10 und deren Uferzonen eingebaut werden, können selbst Spundwände 2 z.B. in Flüssen und Meeren mit integrierten Wärmerohren 8 mit begrenztem Aufwand, technisch in einfacher Weise und kostengünstig installiert werden.

Die integrierten Wärmerohre 8 bestehen aus druckfesten Metallkonstruktionen, welche nach vorgegebenen thermischen Entzugsleistungen sowie statischen Erfordernissen dimensioniert und gefertigt werden. Hierbei sind mehrere Anordnungsvarianten möglich, welche untereinander verbunden werden können. Damit können wirtschaftliche und technisch effiziente, emissionsfreie Anlagen geschaffen werden, die auch bei langfristigem Betrieb ohne Störungen und ohne Umweltbeeinträchtigung arbeiten.

Spundwandelemente 4 für eine Spundwand 2 sind beispielsweise als Peiner Stahlspundwände bekannt (s. Lieferprogramm "Hoesch Stahlspundwände" 1/03 bzw. "Peiner Stahlspundwände" 3/02 der HSP Hoesch Spundwand und Profil GmbH, Dortmund). In diesen Firmenprospekten werden gewalzte Spundwandelemente 4 je nach Ausführungsform wasserdicht verriegelbar angeboten, die über Spundwandschlösser 42 miteinander verbunden werden können.

Diese Spundwandelemente 4 dienen unter anderem zur Stützung von Geländesprüngen und zur Sicherung von Baugruben, Deichen, Dämmen und Hafenanlagen. Sie müssen hierbei große horizontale Kräfte aufnehmen können, die zu einer entsprechenden Biegebelastung der Spundwände 2 senkrecht zu dem Verlauf der Spundwandelemente 4 führen. Maßgebend für die Bemessung ist im Regelfall die vom Spundwandelement 4 über das Widerstandsmoment aufnehmbare Biegebelastung aus dem seitlichen Erd- und/oder Wasserdruck. Je nach aufzunehmender Belastung können diese Spundwandelemente 4 über die Verbindungsschlösser 42 derart mit gleichartigen Spundwandelementen 4 verbunden werden, so dass eine geschlossene Spundwand 2 aus einzelnen Spundwandelementen 4 mit hohem Widerstandsmoment hergestellt werden kann, oder sie können für eine Spundwand 2 mit unterschiedlichen Spundwandelementen 4 verwendet werden, wobei über das Verbindungsschloss 42 beispielsweise U- oder Z-förmige Elemente aneinander gereiht werden können.

Je nach erforderlichem Widerstandsmoment der Spundwandelemente 4 werden diese im Wesentlichen in verschiedenen Bauhöhen mit unterschiedlichen Wanddicken angeboten.

Nach dem Stand der Technik gibt es verschiedene Möglichkeiten das Widerstandsmoment eines Standardprofils als Spundwandelement 4 zu erhöhen, ohne dass ein unwirtschaftlicheres Profil gewählt, oder ein gänzlich neues mit entsprechend geänderter Geometrie (im Wesentlichen hinsichtlich Bauhöhe und Flanschdicke) gewählt werden muss. Um diese Nachteile zu vermeiden, wird versucht, das Widerstandsmoment entsprechend den Anforderungen unter Beibehaltung der Geometrie des Standard-Spundwandelementes 4 zu optimieren.

Eine in der Praxis seit langem bekannte und bewährte Möglichkeit ist das Aufschweißen von Stahllamellen auf einer oder beiden Flanschaußenseiten des Spundwandelementes 4 (s. a. Auszug aus dem Lieferprogramm "Peiner Stahlspundwände" 3/02). Diese Lamellen werden vorzugsweise im Bereich des höchsten auftretenden Biegemomentes angeordnet. Das Aufschweißen von Lamellen ist arbeitsintensiv und verursacht zusätzliche Kosten durch Nachrichtarbeiten am Spundwandelement 4, die durch auftretende Schweißspannungen verursacht werden.

Ein Spundwandelement 4 kann mit einer zweiten, im Abstand zum Steg angeschweißten Zwischenplatte /Lamelle verwendet werden, bei dem bei konstant gehaltener Profilabmessung des gegebenen Standardprofils gleichzeitig das mittlere Widerstandsmoment erhöht wird, wobei der daraus entstandene Hohlraum 6 zusätzlich als in die Spundwand 2 integriertes Wärmerohr 8 Verwendung finden kann.

Der Vorteil eines derartigen, in die Spundwand 2 integrierten Wärmerohres 8 besteht darin, dass auch große Spundwandkonstruktionen kostengünstig einer neuen zusätzlichen Nutzung zugeführt werden können, ohne grundsätzliche Veränderungen an den geplanten Bauwerken und deren statischen Anforderungen vornehmen zu müssen. Dabei kann zusätzlich regenerative Energie gewonnen werden.

Durch die Integration der Wärmerohre 8 in eine Spundwand 2 kann ein ohnehin erforderliches Sicherungsbauwerk gleichzeitig zur Wärmegewinnung genutzt werden.

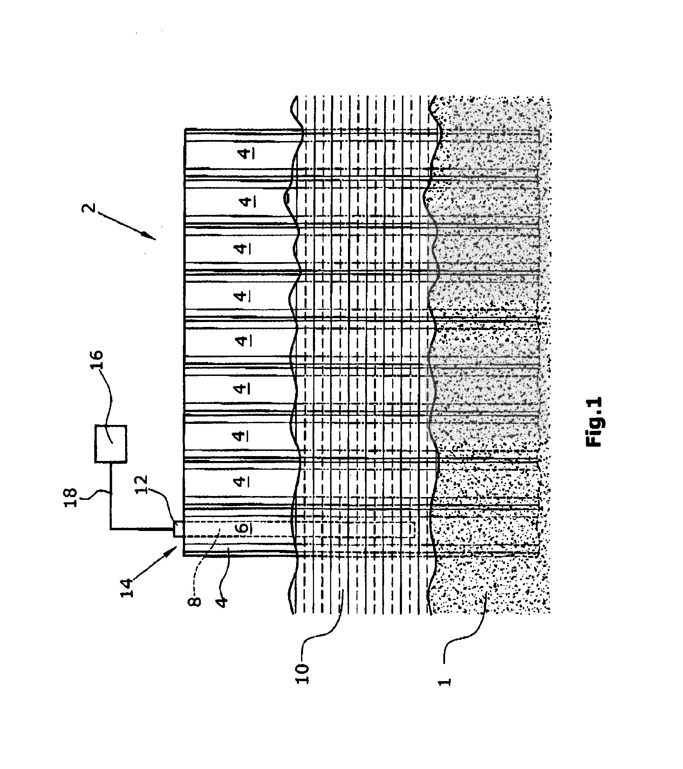

Figur 1 zeigt eine Spundwand 2 aus mehreren miteinander verriegelbaren Spundwandelementen 4, die im Untergrund oder Erdreich 1 verankert sind. Die einzelnen Spundwandelemente 4 sind mit einem Schloss 42 miteinander verriegelt, wobei sie auch eine dichte Spundwand 2 bilden können, die gegen das Wasser 10 abdichtet.

Die Figur 1 ist lediglich schematisch. Typischerweise befindet sich eine derartige Spundwand 2 zu ca. 2/3 im Erdreich 1 und ca. 1/3 ihrer Länge befindet sich im Wasser 10.

Vorzugsweise weisen die Spundwandelemente 4 ein Wärmerohr 8 auf, das wärmeleitend mit dem Spundwandelement 4 gekoppelt ist. Das Wärmerohr 8 kann als selbständiges Bauteil in das Spundwandelement 4 integriert sein oder in einem geschlossenen Hohlraum 6 des Spundwandelementes 4 ausgebildet sein.

Das Wärmerohr 8 entzieht über die Spundwandelemente 4 und zwar vorzugsweise über die gesamte Fläche eines Spundwandelementes 4 dem Wasser 10 oder dem Erdreich 1 Wärmeenergie. Die an dem wärmeren Ende 14 des Wärmerohrs 8 gesammelte Wärmeenergie wird über einen Wärmetauscher 12 und eine Leitung 18 an eine Wärmepumpe 16 weitergeleitet.

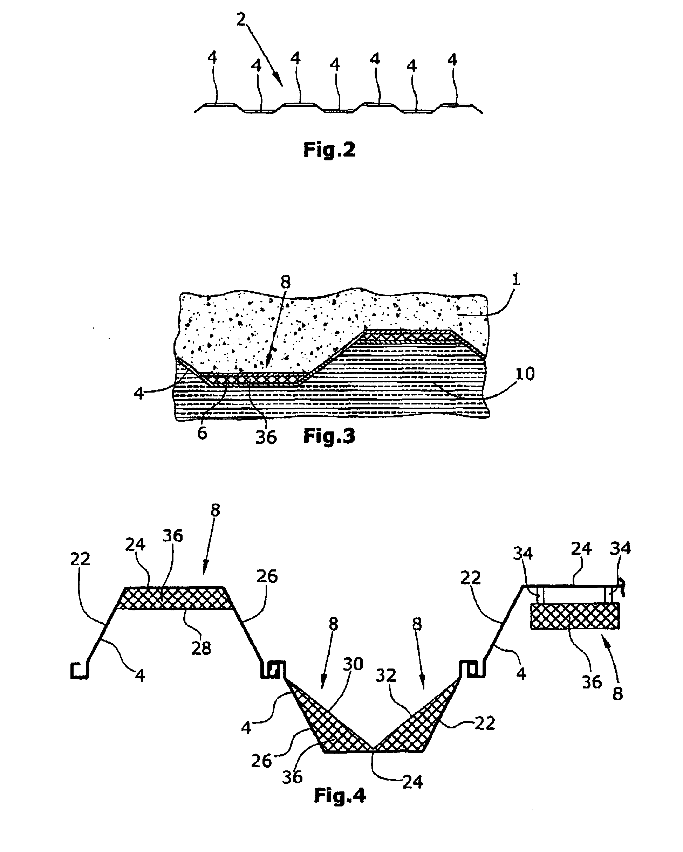

Wie in den Figuren 2 und 3 gezeigt, kann das Spundwandelement 4 zur Bildung eines Hohlraums 6 doppelwandig ausgebildet sein, wobei das Wärmerohr 8 in dem Hohlraum 6 gebildet ist und das Spundwandelement 4 die Begrenzungswände des Wärmerohrs 8 bildet. Die Hohlräume 6 sind an ihrem unteren und oberen Ende 14 geschlossen, so dass das Wärmerohr 8 in einem hermetisch geschlossenen Hohlraum 6 enthalten ist.

Figur 4 zeigt einen anderes alternatives Ausführungsbeispiel, bei dem das Spundwandelement 4 auf der linken Seite der Zeichnung im Wesentlichen den Spundwandelementen 4 der Figuren 2 und 3 entspricht und das mittlere Spundwandelement 4 die Integration von zwei Wärmerohren 8 zeigt, die dadurch gebildet sind, dass das Spundwandprofil an zwei Stellen überbrückt ist.

Figur 4 zeigt auf der rechten Seite ein handelsübliches Wärmerohr 8, das über wärmeleitende Verbindungselemente 34 mit einem Wandelement 24 verbunden ist.

Das Wärmetransportmedium in den Wärmerohren 8 ist für einen Betriebsbereich zwischen ca. - 10° Celsius und + 40° Celsius ausgelegt und besteht vorzugsweise aus CO₂.

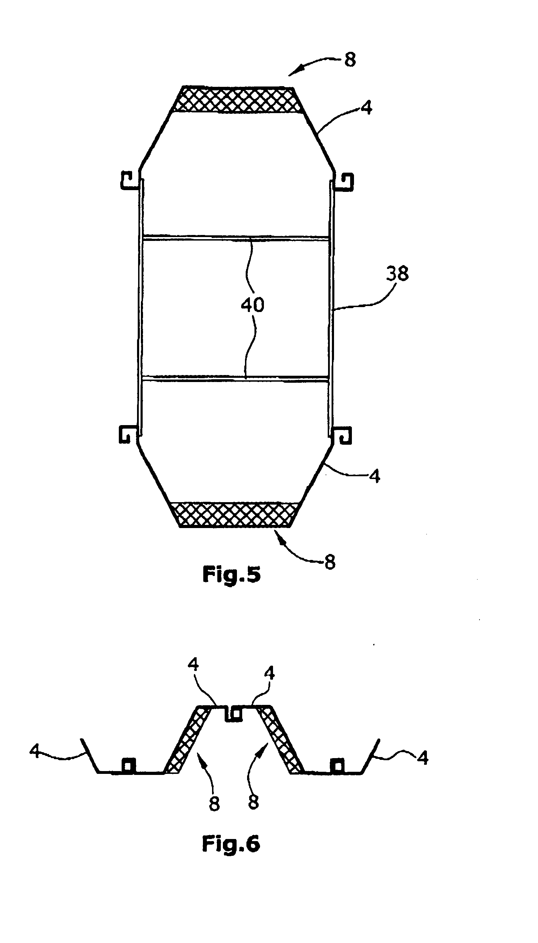

Figur 5 zeigt die Wärmerohre 8 vorzugsweise auf der dem Wasser abgewandten Seite der Spundwand 2. Das Ausführungsbeispiel der Figur 5 zeigt einen Kastenpfahl 38 mit Aussteifungen 40 in Verbindung mit Spundwandelementen 4, die jeweils ein Wärmerohr 8 aufweisen.

Derartige Kastenpfähle 38 dienen als Stütze für eine Spundwand 2, beispielsweise bei einem hohen Wasserdruck.

Figur 6 zeigt ein Ausführungsbeispiel, bei dem die Wärmerohre 8 auf einer Seite einer andersartigen Profilierung angeordnet sind.

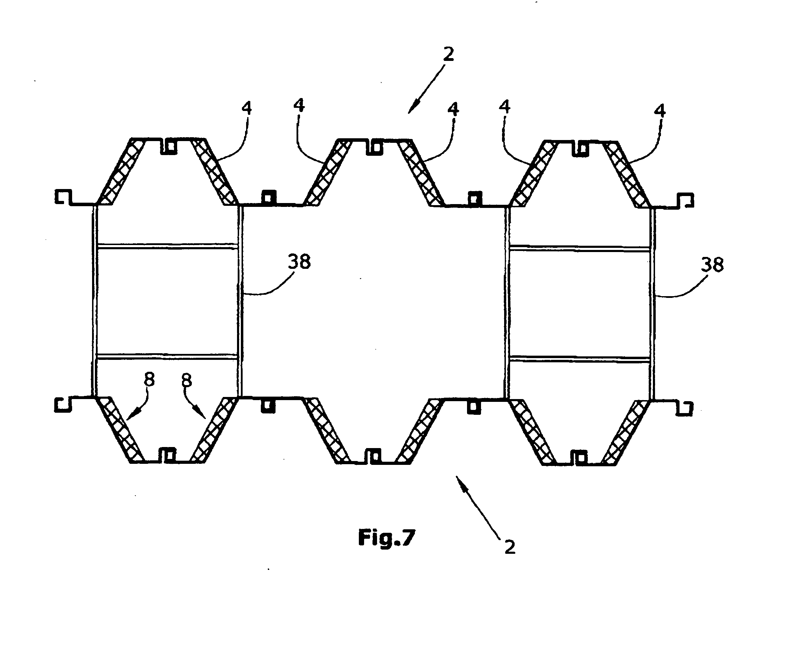

Figur 7 zeigt eine doppelte Spundwand 2, die an mehreren Kastenpfählen 38 abgestützt ist. Die Wärmerohre 8 sind dabei auf der dem Wasser 10 abgewandten Seite der Spundwand 2 angeordnet.

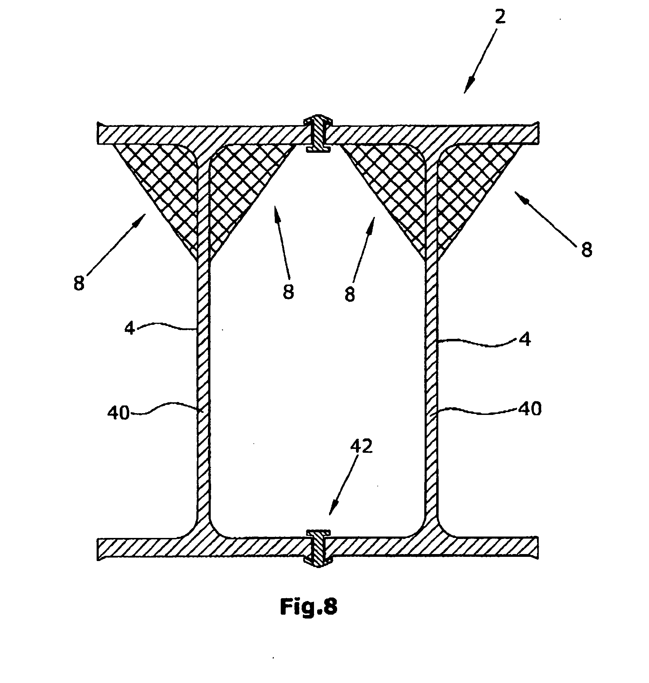

Figur 8 zeigt eine Spundwand 2 aus Spundwandelementen 4 in Form von Kastenspundbohlen 40, die über Verbindungs- und Verriegelungselemente 42 miteinander verbunden sind. Die Wärmerohre 8 sind dabei beispielhaft auf einer Seite des in Querschnitt I-förmigen Profils auf der Innenseite angeordnet.

## Patentansprüche

1. Vorrichtung zur Wärmegewinnung aus der Umgebung zum Einsatz im Tief- und Wasserbau, wobei
bei einer im Erdreich (1) verankerten Spundwand (2) aus mehreren miteinander verriegelbaren Spundwandelementen (4) die Spundwandelemente (4) mindestens einen geschlossenen Hohlraum (6) aufweisen, **dadurch gekennzeichnet, dass** der Hohlraum als Wärmerohr (8) ausgestaltet ist, wobei das Wärmerohr (8) über die Spundwandelemente (4) dem Wasser (10) oder dem Erdreich (1) entzogene Wärmeenergie über einen Wärmetauscher (12) an einem Ende (14) des Wärmerohrs (8) an eine Wärmepumpe (16) weiterleitet.

2. Vorrichtung nach Anspruch 1, **dadurch gekennzeichnet, dass** an einem doppelwandigen Spundwandelement (4) mindestens ein sich in Vertikalrichtung erstreckendes Wärmerohr (8) angeordnet ist.

3. Vorrichtung nach Anspruch 1 oder 2, **dadurch gekennzeichnet, dass** der mindestens eine sich in Vertikalrichtung erstreckende Hohlraum (6) aus einem an dem Spundwandelement (4) befestigten, an den Enden geschlossenen Rohrprofil gebildet sind.

4. Vorrichtung nach einem der Ansprüche 1 bis 3, **dadurch gekennzeichnet, dass** das mindestens eine Wärmerohr (8) ein Wärmetransportmedium für den Temperaturbereich zwischen - 10° Celsius und + 40° Celsius enthält.

5. Vorrichtung nach einem der Ansprüche 1 bis 4, **dadurch gekennzeichnet, dass** das mindestens eine Wärmerohr (8) aus einer CO₂ - Heatpipe besteht.

6. Vorrichtung nach einem der Ansprüche 1 bis 5, **dadurch gekennzeichnet, dass** die Spundwandelemente (4) Profilierungen aufweisen, die zueinander in Längsrichtung parallel verlaufende winkelmäßig zueinander versetzte Wandabschnitte (22, 24, 26) aufweisen, wobei die an den Enden geschlossenen Hohlräume (6) zur Bildung der Wärmerohre (8) durch zu den Wandabschnitten in deren Längsrichtung parallel verlaufende Wandelemente (28, 30, 32) gebildet sind, die mindestens zwei Wendeabschnitte (22, 24, 26) überbrücken.

7. Vorrichtung nach einem der Ansprüche 1 bis 6, **dadurch gekennzeichnet, dass** die Wärmerohre (8) im sich im Wasser (10) befindlichen Bereich der Spundwand (2) auf der dem Wasser (10) abgewandten Seite angeordnet sind.

8. Verfahren zur Wärmegewinnung aus der Umgebung zum Einsatz im Tief- und Wasserbau, wobei
eine Spundwand (2) mit mehreren miteinander verriegelbaren Spundwandelementen (4) in das Erdreich (1) getrieben wird, wobei mindestens ein Wärmerohr (8) in der Spundwand (2) gebildet oder wärmeleitend befestigt wird, und die von dem Wärmerohr (8) über die Spundwandelemente (4) dem Wasser (10) oder dem Erdreich (1) entzogene Wärmeenergie über einen Wärmetauscher (12) an einem Ende (14) des Wärmerohrs (8) an eine Wärmepumpe (16) weitergeleitet wird.

9. Verfahren nach Anspruch 8, **dadurch gekennzeichnet, dass** an den Spundwandelementen (4) sich in Vertikalrichtung erstreckende Hohlräume (6) gebildet werden, die Wärmerohre (8) aufnehmen oder ein Wärmerohr (8) bilden.

10. Verfahren nach einem der Ansprüche 8 oder 9, **dadurch gekennzeichnet, dass** CO₂ Heatpipes als Wärmerohre (8) verwendet werden.

11. Verwendung von Spundwandelementen (4) einer Spundwand (2) mit mehreren miteinander verriegelbaren Spundwandelementen (4) zum Einsatz im Tief- und Wasserbau zum Aufnehmen mindestens eines Wärmerohres (8) und zur Wärmeenergiegewinnung aus dem Wasser (10) oder dem Erdreich (1) über die gesamte Fläche der Spundwandelemente (4).

## Claims

1. A device for recovering heat from the environment for use in civil and hydraulic engineering, wherein in a sheet piling wall (2) anchored in a subgrade (1) and made of sheet piling wall elements (4) that can be locked to each other, the sheet piling wall elements (4) comprise at least one closed hollow space (6), **characterized in that** the hollow space is designed as a heat pipe (8), wherein the heat pipe (8) transfers thermal energy drawn from the water (10) or the ground (1) via the sheet piling wall elements (4) to a heat pump (16) via a heat exchanger (12) at the one end (14) of the heat pipe (8).

2. The device of claim 1, **characterized in that** at least one vertically extending heat pipe (8) is arranged on a double-walled sheet piling wall element (4).

3. The device of claim 1 or 2, **characterized in that** the at least one vertically extending hollow space (6) is formed by a pipe profile fastened to the sheet piling wall element (4) and closed at the ends.

4. The device of one of claims 1 to 3, **characterized in that** the at least one heat pipe (8) contains a heat transport medium suited for the temperature range from -10° Centigrade to +40° Centigrade.

5. The device of one of claims 1 to 4, **characterized in that** the at least one heat pipe (8) is a COₛ heat pipe.

6. The device of one of claims 1 to 5, **characterized in that** the piping wall elements (4) have profiles that comprise wall sections (22, 24, 26) extending in parallel with each other in the longitudinal direction and being angularly offset with respect to each other, wherein, to form the heat pipes (8), the hollow spaces (6) closed at the ends are formed by wall elements (28, 30, 32) extending in parallel with said wall sections in the longitudinal direction thereof, said wall elements bridging at least two wall sections (22, 24, 26).

7. The device of one of claims 1 to 6, **characterized in that**, in the portion of the sheet piling wall (2) located in water (10), the heat pipes (8) are arranged on the side averted from the water (10).

8. A method for recovering heat from the environment for use in civil and hydraulic engineering, wherein a sheet piling wall (2) comprising a plurality of sheet piling wall elements (4) adapted to be locked with each other is driven into the ground (1), wherein at least one heat pipe (8) is formed in the sheet piling wall (2) or is fastened thereto in a thermally conductive manner, and in that the thermal energy extracted by the heat pipe (8) from water (10) or the ground (1) via the sheet piling wall elements (4) is transferred to a heat pump (16) via a heat exchanger (12) at one end (14) of the heat pipe (8).

9. The method of claim 8, **characterized in that** vertically extending hollow spaces (6) are formed at the sheet piling wall elements (4), which accommodate heat pipes (8) or form a heat pipe (8).

10. The method of one of claims 8 or 9, **characterized in that** CO₂ heat pipes are used as the heat pipes (8).

11. The use of sheet piling wall elements (4) of a sheet piling wall (2) comprising a plurality of sheet piling wall elements (4) adapted to be locked with each other, to be used in civil and hydraulic engineering for receiving at least one heat pipe (8) and for recovering thermal heat from water (10) or the ground (1) over the entire surface of the sheet piling wall elements (4).

## Revendications

1. Dispositif pour récupérer de la chaleur de l'environnement destiné à être utilisé en génie civil et en génie hydraulique, dans lequel
dans le cas d'un mur de palplanches (2) ancré dans le sol (1) et constitué de plusieurs éléments de mur de palplanches (4) verrouillables entre eux, les éléments de mur de palplanches (4) comportent au moins un espace creux fermé (6), **caractérisé en ce que** l'espace creux est conformé en caloduc (8), le caloduc (8) transférant de l'énergie thermique, prélevée dans l'eau (10) ou dans le sol (1) par le biais des éléments de mur de palplanches (4), à une pompe à chaleur (16) via un échangeur de chaleur (12) situé à une extrémité (14) du caloduc (8).

2. Dispositif selon la revendication 1, **caractérisé en ce que** au moins caloduc (8), s'étendant dans une direction verticale, est disposé au niveau d'un élément de mur de palplanches (4) à double paroi.

3. Dispositif selon la revendication 1 ou 2, **caractérisé en ce que** l'au moins un espace creux (6), s'étendant dans une direction verticale, est formé à partir d'un profilé creux fermé aux extrémités et fixé à l'élément de mur de palplanches (4).

4. Dispositif selon l'une des revendications 1 à 3, **caractérisé en ce que** l'au moins un caloduc (8) contient un fluide caloporteur pour la gamme de températures comprise entre -10° Celsius et +40° Celsius.

5. Dispositif selon l'une des revendications 1 à 4, **caractérisé en ce que** l'au moins un caloduc (8) comprend un tuyau calorifique de CO₂.

6. Dispositif selon l'une des revendications 1 à 5, **caractérisé en ce que** les éléments de mur de palplanches (4) comportent des profilages qui comprennent des portions de mur (22, 24, 26) décalées angulairement l'une par rapport à l'autre et s'étendant parallèlement l'une à l'autre dans une direction longitudinale, les espaces creux (6) fermés aux extrémités, pour former les caloducs (8), étant formés par des éléments de mur (28, 30, 32) qui s'étendent parallèlement aux portions de mur dans leur direction longitudinale et qui pontent au moins deux portions de mur (22, 24, 26).

7. Dispositif selon l'une des revendications 1 à 6, **caractérisé en ce que** les caloducs (8) sont disposés dans la région du mur de palplanches (2) qui se trouve dans l'eau (10), du côté opposé à l'eau (10).

8. Procédé pour récupérer de la chaleur de l'environnement destiné à être utiliser en génie civil et en génie hydraulique, dans lequel
un mur de palplanches (2) constitué de plusieurs éléments de mur de palplanches (4) verrouillables entre eux est enfoncé dans le sol (1), au moins un caloduc (8) étant formé ou fixé de façon à conduire la chaleur dans le mur de palplanches (2) et l'énergie thermique, prélevée dans l'eau (10) ou dans le sol (1) par le caloduc (8) via les éléments de mur de palplanches (4), étant transférée à une pompe à chaleur (16) via un échangeur de chaleur (12) situé à une extrémité (14) du caloduc (8).

9. Procédé selon la revendication 8, **caractérisé en ce que** des espaces creux (6) s'étendant dans une direction verticale sont formés au niveau des éléments de mur de palplanches (4), reçoivent les caloducs (8) ou forment un caloduc (8).

10. Procédé selon la revendication 8, **caractérisé en ce que** des tuyaux calorifiques de CO₂ sont utilisés comme caloducs (8).

11. Utilisation d'éléments de mur de palplanches (4) d'un mur de palplanches (2) constitué de plusieurs éléments de murs de palplanches (4) verrouillables entre eux et destiné à être utilisé en génie civil ou génie hydraulique pour recevoir un caloduc (8) et à récupérer de l'énergie thermique de l'eau (10) ou du sol (1) sur toute la surface des éléments de mur de palplanches (4).
